# EUROPEAN PATENT APPLICATION

(11) **EP 4 401 234 A1**
(43) Date of publication of application: **17.07.2024**
(21) Application number: 22932665.7
(22) Date of filing: 24.03.2022
(51) Int. Cl.: H01M 50/593, H01M 50/586, H01M 50/574, H01M 50/533

(54) **CURRENT-COLLECTING MEMBER, BATTERY CELL, BATTERY AND POWER CONSUMING DEVICE**

(71) Applicant: Contemporary Amperex Technology Co., Limited, Ningde, Fujian 352100 (CN)
(72) Inventor: CHEN, Shengwang, Ningde, Fujian 352100 (CN); ZHOU, Xigen, Ningde, Fujian 352100 (CN); GUO, Zhijun, Ningde, Fujian 352100 (CN)
(74) Representative: Herrmann, Uwe
(86) International application number: PCT/CN2022/082766
(87) International publication number: WO 2023/178600

(57) **Abstract**

The embodiments of the present disclosure provide a current collector component, a battery cell, a battery, and an electrical equipment, which belongs to the battery technology field. The current collector component includes a current collector and an insulator. The current collector is used to connect the tab and electrode terminal to achieve electrical connection between the tab and electrode terminal. The current collector includes a first connecting part, a second connecting part, and a third connecting part. The first connecting part is used for connecting the tab, and the first connecting part has a fusing part. The second connecting part is configured for connecting the electrode terminal. The third connecting part connects the first connecting part and the second connecting part, and is bent relative to the first connecting part and the second connecting part. The insulator covers the fusing part and the third connecting part to insulate and isolate any one of the fusing part and the third connecting part from the tab. The risk of the fuse function failure of the current collector component caused by the overlap between the tab and the fusing part and/or the third connecting part is reduced, and thus the safety of the battery cell is improved.

## Description

### Technical Field

The present disclosure relates to the field of battery technology, in particular to a current collector component, a battery cell, a battery, and an electrical equipment.

### Background Art

With the development of new energy technology, batteries are more and more widely used, such as mobile phones, laptops, battery cars, electric vehicles, electric aircraft, electric boats, electric toy cars, electric toy boats, electric toy planes and electric tools.

As an energy storage element, battery cells output electrical energy generally through the chemical reaction between the electrode assembly and the electrolyte. In battery technology, it is necessary to consider both the performance of battery cells and the safety of battery cells. Therefore, how to improve the safety of battery cells is an urgent problem to be solved in battery technology.

### Summary

The embodiments of the present disclosure provide a current collector component, a battery cell, a battery, and an electrical equipment, which can effectively improve the safety of the battery cell.

In the first aspect, the embodiment of the present disclosure provides a current collector component, including a current collector and an insulator, wherein the current collector is configured to connect a tab and an electrode terminal to achieve an electrical connection between the tab and the electrode terminal; the current collector includes a first connecting part, a second connecting part, and a third connecting part, wherein the first connecting part is configured to be connected to the tab, and the first connecting part has a fusing part; the second connecting part is configured to be connected to the electrode terminal; and the third connecting part connects the first connecting part and the second connecting part, and is bent relative to the first connecting part and the second connecting part; and the insulator covers the fusing part and the third connecting part to insulate and isolate any one of the fusing part and the third connecting part from the tab.

In the above technical solution, the insulator covers the fusing part and the third connecting part, so as to allow the insulator to insulate and isolate any one of the fusing part and the third connecting part from the tab, thereby reducing the risk of the fuse function failure of the current collector component caused by the overlap between the tab and the fusing part and/or the third connecting part, and improving the safety of the battery cell.

In some embodiments, the insulator includes a first wrapping part and a second wrapping part, wherein the first wrapping part is wrapped around the first connecting part along the circumferential direction of the first connecting part, so as to cover the fusing part; and the second wrapping part is connected to the first wrapping part, and the second wrapping part is wrapped around the third connecting part along the circumferential direction of the third connecting part, so as to cover the third connecting part. The first wrapping part is wrapped around the first connecting part along the circumferential direction of the first connecting part. Firstly, the connection firmness between the insulator and the current collector can be improved. Secondly, the risk of overlap between the tab and the fusing part can be further reduced. Thirdly, the first wrapping part can play a role in blocking the electrolyte to a certain extent, thereby reducing the risk of the electrolyte connecting the disconnected two parts electrically after the fusing part is fused. The second wrapping part is wrapped around the third connecting part along the circumferential direction of the third connecting part. On one hand, the connection firmness between the insulator and the current collector can be improved. On the other hand, the risk of overlap between the tab and the third connecting part can be further reduced.

In some embodiments, the second connecting part has a first surface and a second surface arranged oppositely in a thickness direction of the second connecting part, wherein along the thickness direction, the first surface is closer to the first connecting part than the second surface, and the first surface is configured to be connected with the electrode terminal; and the insulator further includes a covering part, wherein the covering part is connected to the second wrapping part, and the covering part covers at least a part of the second surface. The covering part can play a role in isolating the tab, thereby reducing the risk of the tab overlapping on the second surface of the second connecting part to cause the fuse function failure of the current collector component.

In some embodiments, the thickness of the covering part is 0.3-0.8mm. The thickness of the covering part is set within a reasonable range, which can ensure that the covering part has a good insulation and isolation effect on the tab and the second surface, and also avoid occupying too much space inside the battery cell due to the too thick covering part.

In some embodiments, the second surface is provided with multiple rows of concave part. The concave part on the second surface is set to increase the roughness of the second surface, thereby facilitating the welding of the second connecting part with the electrode terminal, and improving the firmness after welding the second connecting part with the electrode terminal.

In some embodiments, the wall thickness of the first wrapping part is 0.3-0.8mm; and/or the wall thickness of the second wrapping part is 0.3-0.8mm. The wall thickness of the first wrapping part is set within a reasonable range, which can ensure that the first wrapping part has a good insulation and isolation effect on the tab and the fusing part, and also avoid occupying too much space inside the battery cell due to the too thick wall of the first wrapping part. Similarly, the wall thickness of the second wrapping part is set within a reasonable range, which can ensure that the second wrapping part has a good insulation and isolation effect on the tab and the third connecting part, and also avoid occupying too much space inside the battery cell due to the too thick wall of the second wrapping part.

In some embodiments, along the extension direction of the first connecting part, the distance where one end of the first wrapping part away from the second wrapping part protrudes from the fusing part is not less than 2mm. On the one hand, this structure further reduces the risk of overlap between the tab and the fusing part, and on the other hand, this structure further reduces the risk of electrolyte entering the first wrapping part and electrically connecting the two parts formed by the first connecting part after the fusing part is fused.

In some embodiments, the insulator is an injection molded part connected to a surface of the current collector. In this way, the insulator can be formed through injection molding, such that the molding method is simple and cost-effective. The molded insulator is combined with the surface of the current collector, thereby improving the firmness of the connection between the insulator and the current collector.

In some embodiments, the first connecting part and the second connecting part are arranged in parallel, and the first connecting part and the second connecting part extend in opposite directions from the positions connected to the third connecting part, respectively. In this way, it is possible to enable the current collector to connect the tab and the electrode terminal that are far away from each other in the extension direction of the first connecting part.

In some embodiments, the third connecting part is arranged obliquely relative to the first connecting part and the second connecting part, and both the first connecting part and the second connecting part are arranged at an obtuse angle with the third connecting part. In this way, the first connecting part and the second connecting part are farther away from each other in the extension direction of the first connecting part, thereby reducing the risk that the tab crosses the fusing part and the third connecting part and overlaps with the second connecting part.

In the second aspect, the embodiment of the present disclosure provides a battery cell, including a casing, an electrode assembly, an end cover, the electrode terminal, and the current collector component provided by any one of the embodiments of the first aspect mentioned above, wherein the casing has an opening; the electrode assembly has the tab, and the electrode assembly is accommodated in the casing; the end cover is configured to close the opening; the electrode terminal is arranged on the end cover; and the current collector component is located on one side of the end cover facing the electrode assembly, wherein the first connecting part is connected to the tab, and the second connecting part is connected to the electrode terminal.

In some embodiments, along the thickness direction of the end cover, the second connecting part is further away from the end cover than the first connecting part. This structure can narrow the gap between the end cover and electrode assembly, which is beneficial for improving the energy density of the battery cell.

In the third aspect, the embodiment of the present disclosure provides a battery, including a box and the battery cell provided by any one of the embodiments of the second aspect mentioned above, wherein the box is configured to accommodate the battery cell.

In the fourth aspect, the embodiment of the present disclosure provides an electrical equipment, including the battery provided by any one of the embodiments of the third aspect mentioned above.

In a fifth aspect, the embodiment of the present disclosure provides a manufacturing method for a current collector component, including: providing a current collector, wherein the current collector is configured to connect a tab and an electrode terminal to achieve an electrical connection between the tab and the electrode terminal; and the current collector includes a first connecting part, a second connecting part, and a third connecting part, wherein the first connecting part is configured to be connected to the tab, and the first connecting part has a fusing part; the second connecting part is configured to be connected to the electrode terminal; and the third connecting part connects the first connecting part and the second connecting part, and is bent relative to the first connecting part and the second connecting part; providing an insulator; and making the insulator cover the fusing part and the third connecting part to insulate and isolate any one of the fusing part and the third connecting part from the tab.

In some embodiments, the making the insulator cover the fusing part and the third connecting part includes: injection-molding the insulator on a surface of the current collector, such that the insulator covers the fusing part and the third connecting part. The insulator is injection-molded on a surface of the current collector, in which the molding method for the insulator is simple and cost-effective. The molded insulator is combined together with the surface of the current collector, thereby improving the firmness of the connection between the insulator and the current collector.

In the sixth aspect, the embodiment of the present disclosure also provides a manufacturing equipment for a current collector component, including a first providing device, a second providing device, and an assembling device, wherein the first providing device is configured to provide a current collector, wherein the current collector is configured to connect a tab and an electrode terminal to achieve an electrical connection between the tab and the electrode terminal; and the current collector includes a first connecting part, a second connecting part, and a third connecting part, wherein the first connecting part is configured to be connected to the tab, and the first connecting part has a fusing part; the second connecting part is configured to be connected to the electrode terminal; and the third connecting part connects the first connecting part and the second connecting part, and is bent relative to the first connecting part and the second connecting part; the second providing device is configured to provide an insulator; and the assembling device is configured to make the insulator cover the fusing part and the third connecting part to insulate and isolate any one of the fusing part and the third connecting part from the tab.

### Brief Description of Drawings

In order to more clearly illustrate technical solutions of embodiments of the present disclosure, drawings required for use in the embodiments will be described briefly below. It should be understood that the following drawings are merely illustrative of some embodiments of the present disclosure, which therefore should not be understood as a limitation to the scope. For those of ordinary skill in the art, other related drawings can also be obtained according to these drawings without any inventive effort.
FIG. 1 is a schematic view of the structure of the vehicle provided in some embodiments of the present disclosure;
FIG. 2 is an exploded view of the battery provided in some embodiments of the present disclosure;
FIG. 3 is a sectional view of the battery cell provided in some embodiments of the present disclosure;
FIG. 4 is an axonometric drawing of the current collector component shown in FIG. 3;
FIG. 5 is a sectional view of the current collector component shown in FIG. 4;
FIG. 6 is a bottom view of the current collector component shown in FIG. 5;
FIG. 7 is an axonometric drawing of the current collector shown in FIG. 6;
FIG. 8 is a sectional view of the current collector shown in FIG. 7;
FIG. 9 is a partial enlarged view of the A part of the battery cell shown in FIG. 3;
FIG. 10 is a flowchart of the manufacturing method for current collector component provided in some embodiments of the present disclosure; and
FIG. 11 is a schematic block diagram of the manufacturing equipment for current collector component provided in some embodiments of the present disclosure.

Reference signs: 10-box; 11-first part; 12-second part; 20-battery cell; 21-casing; 22-electrode assembly; 221-tab; 221a-positive electrode tab; 221b-negative electrode tab; 23-end cover; 24-electrode terminal; 24a-positive electrode terminal; 24b-negative electrode terminal; 25-current collector component; 251-current collector; 2511-first connecting part; 2511a-fusing part; 2511b-notch; 2512-second connecting part; 2512a-first surface; 2512b-second surface; 2512c-concave part; 2513-third connecting part; 252-insulator; 2521-first wrapping part; 2521a-free end; 2522-second wrapping part; 2523-covering part; 100-battery; 200-controller; 300-motor; 1000-vehicle; 2000-manufacturing equipment; 2100-first providing device; 2200-second providing device; and 2300-assembling device.

### Detailed Description of Embodiments

In order to make the objectives, technical solutions and advantages of the embodiments of the present disclosure clearer, the technical solutions in the embodiments of the present disclosure will be described clearly below with reference to the drawings in the embodiments of the present disclosure. Obviously, the embodiments described are some of, rather than all of, the embodiments of the present disclosure. All the other embodiments obtained by those of ordinary skill in the art based on the embodiments of the present disclosure without any creative effort shall fall within the scope of protection of the present disclosure.

Unless otherwise defined, all technical and scientific terms used in the present disclosure have the same meanings as those commonly understood by those skilled in the art to which the present disclosure belongs. The terms used in the description of the present disclosure are merely for the purpose of describing specific embodiments, but are not intended to limit the present disclosure. The terms "comprise/include", "provide", and any variations thereof in the description and claims, as well as the brief description of the drawings described above of the present disclosure are intended to cover non-exclusive inclusions. The terms "first", "second", etc. in the description and the claims of the present disclosure or the drawings are used to distinguish different objects, rather than describing specific sequences or primary and secondary relationships.

In the present disclosure, the phrase "embodiment" mentioned means that the specific features, structures, or characteristics described with reference to the embodiments may be encompassed in at least one embodiment of the present disclosure. The phrase at various locations in the description does not necessarily refer to the same embodiment, or an independent or alternative embodiment exclusive of another embodiment.

In the description of the present disclosure, it should be noted that unless otherwise explicitly specified and defined, the terms "install", "link", "connect" and "attach" should be understood in a broad sense, for example, it may be a fixed connection, a detachable connection, or an integrated connection; and may be a direct connection, an indirect connection by means of an intermediate medium, or internal communication between two elements. For those of ordinary skill in the art, the specific meaning of the foregoing terms in the present disclosure may be understood according to specific circumstances.

The term "and/or" in the present disclosure is only a description for the association relationship of the associated object, indicating that there can be three types of relationships. For example, A and/or B can indicate three conditions: the presence of only A, the presence of both A and B, and the presence of only B. In addition, the character "/" in the present disclosure generally indicates that the associated objects before and after have an "or" relationship.

In the embodiments of the present disclosure, the same reference signs represent the same components, and for simplicity, detailed descriptions for the same components are omitted in different embodiments. It should be understood that the thickness, length, width, and other dimensions of various components in the embodiments of the present disclosure shown in the drawings, as well as the overall thickness, length, width, and other dimensions of the integrated device, are only illustrative examples and should not constitute any limitations to the present disclosure.

The term "multiple (a plurality of)" in the present disclosure refers to two or more (including two).

In the present disclosure, the battery cell can include a lithium ion secondary battery, a lithium ion primary battery, a lithium sulfur battery, a sodium lithium ion battery, a sodium ion battery or a magnesium ion battery, etc., which is not limited by the embodiments of the present disclosure. The battery cell can be cylindrical, flat, or rectangular, or be of other shapes, which is also not limited by the embodiments of the present disclosure. Battery cells are generally divided into three types according to the packaging method: cylindrical battery cell, square battery cell, and soft pack battery cell, which is also not limited by the embodiments of the present disclosure.

The battery mentioned in the embodiments of the present disclosure refers to a single physical module that includes one or more battery cells to provide higher voltage and capacity. For example, the batteries mentioned in the present disclosure may include battery modules or battery packs, etc. The battery generally includes a box used to encapsulate one or more battery cells. The box can prevent liquids or other foreign objects from affecting the charging or discharging of battery cells.

The battery cell includes an electrode assembly and an electrolyte, and the electrode assembly is composed of a positive electrode plate, a negative electrode plate, and a separator. Battery cells mainly rely on metal ions moving between the positive and negative electrode plates to operate. The positive electrode plate includes a positive electrode current collector and a positive electrode active substance layer. The positive electrode active substance layer is coated on the surface of the positive electrode current collector, and the positive electrode current collector without the positive electrode active substance layer protrudes from the positive electrode current collector coated by the positive electrode active substance layer. The positive electrode current collector without the positive electrode active substance layer is used as the positive electrode tab. Taking lithium ion batteries as an example, the material for the positive electrode current collector can be aluminum, and the active substance of the positive electrode can be lithium cobalt oxide (lithium cobaltate), lithium iron phosphate, ternary lithium, or lithium manganese oxide (lithium manganate). The negative electrode plate includes a negative electrode current collector and a negative electrode active substance layer. The negative electrode active substance layer is coated on the surface of the negative electrode current collector, and the negative electrode current collector without the negative electrode active substance layer protrudes from the negative electrode current collector coated by the negative electrode active substance layer. The negative electrode current collector without the negative electrode active substance layer is used as the negative electrode tab. The material for the negative electrode current collector can be copper, and the active substance of the negative electrode can be carbon, silicon or the like. In order to ensure that fusing does not occur under a high current, multiple positive electrode tabs are provided and stacked together, and multiple negative electrode tabs are provided and stacked together. The material of the separator can be PP (polypropylene) or PE (polyethylene), etc. In addition, the electrode assembly can be of a wound structure or a laminated structure (stacked structure), which is not limited by the embodiments of the present disclosure.

The development of battery technology needs to consider multiple design factors simultaneously, such as energy density, cycle life, discharge capacity, charging and discharging rate, and other performance parameters. In addition, it is also necessary to consider the safety of the battery.

For a battery cell, the current collector component is generally connected between the tab and the electrode terminal to achieve electrical connection between the tab and the electrode terminal, so as to output the electrical energy of the battery cell through the electrode terminal.

To improve the safety of battery cells, a fusing part is usually formed on the current collector component. During the charging and discharging process, the fusing part will be fused when the current passing through the current collector component reaches the fuse current, so as to reduce the occurrence of accidents such as battery cell explosion and fire.

The inventor noticed that the fusing function of the current collector component is prone to failure, and accidents such as battery cell explosion and fire may occur. The inventor studied and found that in battery cells, in order to facilitate the electrical connection between the electrode terminal and the tab, the current collector component is generally designed as a bent structure, so that the current collector component forms a first connecting part, a second connecting part, and a third connecting part. The third connecting part is connected between the first connecting part and the second connecting part, and the third connecting part is bent relative to the first connecting part and the second connecting part. The first connecting part is connected to the tab, and the second connecting part is connected to the electrode terminal. The fusing part is formed on the first connecting part. For the current collector component of this structure, during the assembly process, it is easy for the tab to overlap with the fusing part, or even cross the fusing part to overlap with the third connecting part, so that the fusing part does not fuse when the current passing through the current collector component reaches the fuse current, or even if the fusing part is fused, the tab and electrode terminal are still electrically connected through the third and second connecting parts, resulting in the failure of the fuse function of the current collector component and the occurrence of safety accidents.

In view of this, the embodiment of the present disclosure provides a current collector component, which includes a current collector and an insulator. The current collector is used to connect the tab and electrode terminal to achieve electrical connection between the tab and electrode terminal. The current collector includes a first connecting part, a second connecting part, and a third connecting part. The first connecting part is used for connecting the tab, and the first connecting part has a fusing part. The second connecting part is used for connecting electrode terminal. The third connecting part connects the first connecting part and the second connecting part, and is bent relative to the first connecting part and the second connecting part. The insulator covers the fusing part and the third connecting part to insulate and isolate any one of the fusing part and the third connecting part from the tab.

In such current collector component, the insulator covers the fusing part and the third connecting part, so as to allow the insulator to insulate and isolate any one of the fusing part and the third connecting part from the tab, thereby reducing the risk of the fuse function failure of the current collector component caused by the overlap between the tab and the fusing part and/or the third connecting part, and improving the safety of the battery cell.

The technical solution described in the embodiments of the present disclosure is applicable to batteries and electrical equipment using batteries.

The electrical equipment can be a vehicle, a mobile phone, a portable device, a notebook computer, a ship, a spacecraft, an electric toy, an electric tool, and the like. The vehicle can be a fuel vehicle, a gas vehicle, or a new energy vehicle. The new energy vehicle can be a pure electric vehicle, a hybrid electric vehicle, a range extended vehicle, or the like. The spacecraft includes an aircraft, a rocket, a space shuttle, a spacecraft, and the like. The electric toys include a stationary or mobile electric toy, such as a game console, an electric vehicle toy, an electric ship toy, an electric airplane toy, and the like. The electric tools include a metal cutting electric tool, a grinding electric tool, an assembly electric tool, and an electric tool for railways, such as an electric drill, an electric grinder, an electric wrench, an electric screwdriver, an electric hammer, an electric impact drill, a concrete vibrator, and an electric planer. The foregoing electrical equipment is not specially limited in the embodiment of the present disclosure.

For ease of description, the following embodiments will be described by taking an electrical equipment being a vehicle as an example.

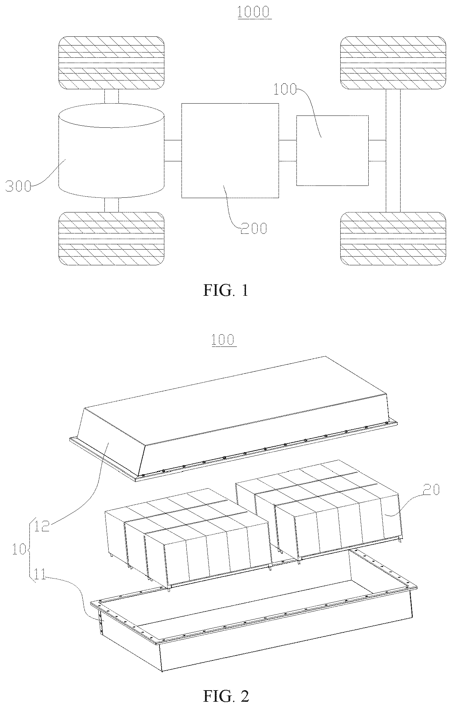

Referring to FIG. 1, FIG. 1 is a structural schematic view of the vehicle 1000 provided in some embodiments of the present disclosure. The interior of vehicle 1000 is equipped with battery 100, which can be installed at the bottom, head, or tail of vehicle 1000. Battery 100 can be used for the power supply for the vehicle 1000. For example, battery 100 can serve as the operating power supply for vehicle 1000.

The vehicle 1000 can also include a controller 200 and a motor 300, wherein the controller 200 is used to control the battery 100 to supply power to the motor 300, for example, used for the working power demand during startup, navigation, and running of the vehicle 1000.

In some embodiments of the present disclosure, the battery 100 can not only serve as the operating power source for vehicle 1000, but also as the driving power source for vehicle 1000, thereby replacing or partially replacing fuel or natural gas to provide driving power for vehicle 1000.

Referring to FIG. 2, FIG. 2 is an explosion view of the battery 100 provided in some embodiments of the present disclosure. The battery 100 includes a box 10 and a battery cell 20, and the box 10 is used to accommodate the battery cell 20.

In the above, the box 10 is a component that accommodates the battery cell 20, and the box 10 provides an accommodating space for the battery cell 20. The box 10 can be of various structures. In some embodiments, the box 10 may include a first part 11 and a second part 12, with the first part 11 and the second part 12 covering each other, so as to define an accommodating space for accommodating the battery cell 20. The first part 11 and the second part 12 can be of various shapes, such as cuboid, cylinder, etc. The first part 11 can be of a hollow structure with one side opened, and the second part 12 can also be of a hollow structure with one side opened. The opened side of the second part 12 covers the opened side of the first part 11, so as to form a box 10 with accommodating space. It can also be that the first part 11 is of a hollow structure with one side opened, the second part 12 is of a plate-like structure, and the second part 12 covers the opened side of the first part 11, so as to form a box 10 with accommodating space. The first part 11 and the second part 12 can be sealed through sealing elements, which can be sealing rings, sealants, etc.

In battery 100, one or multiple battery cells 20 can be provided. If multiple battery cells 20 are provided, the multiple battery cells 20 can be connected in series, parallel, or hybrid. Hybrid connection means that both series connection and parallel connection exist among multiple battery cells 20. It is possible that multiple battery cells 20 are first connected in series, parallel, or hybrid to form a battery module, and multiple battery modules are then connected in series, parallel, or hybrid to form a whole to be accommodated in the box 10. Alternatively, all battery cells 20 can be directly connected in series, parallel, or hybrid together, and then the entire body composed of all battery cells 20 can be accommodated in the box 10.

In some embodiments, battery 100 may also include a busbar component, and multiple battery cells 20 may be electrically connected through the busbar component, so as to achieve series, parallel, or hybrid connection of multiple battery cells 20. The busbar component can be metal conductors, such as copper, iron, aluminum, stainless steel, and aluminum alloy.

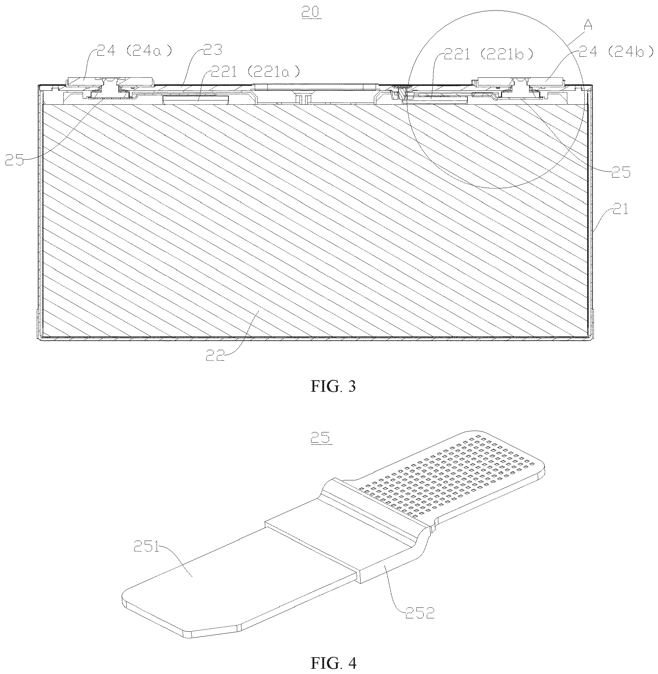

Referring to FIG. 3, FIG. 3 is a sectional view of the battery cell 20 provided in some embodiments of the present disclosure. The battery cell 20 includes a casing 21, an electrode assembly 22, an end cover 23, an electrode terminal 24 and a current collector component 25.

The casing 21 is a component used to accommodate the electrode assembly 22. The casing 21 can be of a hollow structure with one end forming an opening, and the casing 21 can be of a hollow structure with two opposite ends forming openings. The casing 21 can be of various shapes, such as cylinder, cuboid, etc. The material of casing 21 can be various, such as copper, iron, aluminum, steel, aluminum alloy, etc.

The electrode assembly 22 is a component in the battery cell 20 that undergoes electrochemical reactions. The electrode assembly 22 can include a positive electrode plate, a negative electrode plate, and a separator. The electrode assembly 22 can be in a wound structure formed by winding the positive electrode plate, the separator, and the negative electrode plate, or a stacked structure formed by stacking the positive electrode plate, the separator, and the negative electrode plate. The electrode assembly 22 has a tab 221, which includes a positive electrode tab 221a and a negative electrode tab 221b. The positive electrode tab 221a can be the part of the positive electrode plate that is not coated with a positive electrode active substance layer, and the negative electrode tab 221b can be the part of the negative electrode plate that is not coated with a negative electrode active substance layer.

The end cover 23 is a component that blocks the opening of the casing 21 to isolate the internal environment of the battery cell 20 from the external environment. The end cover 23 and the casing 21 jointly define a sealed space for accommodating the electrode assembly 22, the electrolyte, and other components. The shape of the end cover 23 can match the shape of the casing 21. For example, the casing 21 is of a cuboid structure, and the end cover 23 is of a rectangular plate-like structure matching the casing 21. For another example, the casing 21 is of a cylindrical structure, and the end cover 23 is of a circular plate-like structure matching the casing 21. The material of end cover 23 can also be various, such as copper, iron, aluminum, steel, aluminum alloy, etc. The end cover 23 and the casing 21 can be made of the same material or different materials.

In the battery cell 20, one or two end covers 23 can be provided. If the casing 21 is of a hollow structure with an opening formed at one end, one end cover 23 can be correspondingly arranged. If the casing 21 is of a hollow structure with openings formed at both ends, two end covers 23 can be provided correspondingly, and the two end covers 23 each block the two openings of the casing 21.

The electrode terminal 24 is arranged on the end cover 23 and is electrically connected to the tab 221 of the electrode assembly 22 to output the electrical energy of the battery cell 20. In the battery cell 20, electrode terminals 24 can be arranged into two, namely positive electrode terminal 24a and negative electrode terminal 24b. The positive electrode terminal 24a is used for electrical connection with the positive electrode tab 221a, and the negative electrode terminal 24b is used for electrical connection with the negative electrode tab 221b. In the embodiment where one end cover 23 of the battery cell 20 is provided, the positive electrode terminal 24a and the negative electrode terminal 24b can be set on the same end cover 23. In the embodiment where there are two end covers 23 in battery cell 20, the positive electrode terminal 24a and negative electrode terminal 24b can be set on the same end cover 23, or the positive electrode terminal 24a and negative electrode terminal 24b can be set on two end covers 23, respectively.

The current collector component 25 is a component that connects the tab 221 and the electrode terminal 24 to achieve electrical connection between the tab 221 and the electrode terminal 24. As shown in FIG. 3, taking the case that one end cover 23 of the battery cell 20 is provided, and the positive electrode terminal 24a and the negative electrode terminal 24b are both set on the end cover 23 as an example, the positive electrode terminal 24a can be connected to the positive electrode tab 221a through a current collector component 25, and the negative electrode terminal 24b can be connected to the negative electrode tab 221b through another current collector component 25.

The following is a detailed explanation of the specific structure of the current collector component 25 in conjunction with the drawings.

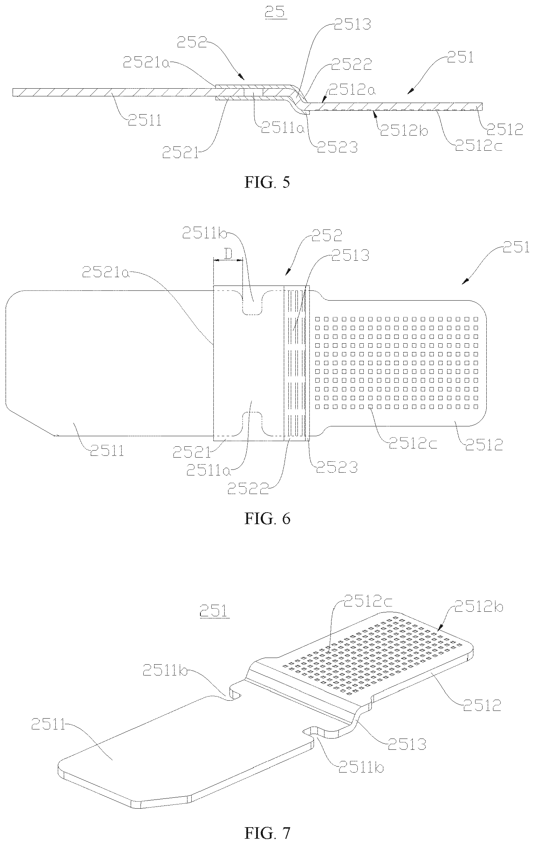

Referring to FIGS. 4 and 5, FIG. 4 is an axonometric drawing of the current collector component 25 shown in FIG. 3; and FIG. 5 is a sectional view of the current collector component 25 shown in FIG. 4. The embodiment of the present disclosure provides a current collector component 25, which includes a current collector 251 and an insulator 252. The current collector 251 is configured to connect the tab 221 and electrode terminal 24 to achieve electrical connection between the tab 221 and electrode terminal 24. The current collector 251 includes a first connecting part 2511, a second connecting part 2512, and a third connecting part 2513. The first connecting part 2511 is configured for connecting the tab 221, and the first connecting part 2511 has a fusing part 2511a. The second connecting part 2512 is configured for connecting the electrode terminal 24. The third connecting part 2513 connects the first connecting part 2511 and the second connecting part 2512, and is bent relative to the first connecting part 2511 and the second connecting part 2512. The insulator 252 covers the fusing part 2511a and the third connecting part 2513 to insulate and isolate any one of the fusing part 2511a and the third connecting part 2513 from the tab 221.

The current collector 251 is a component that connects the tab 221 and the electrode terminal 24 to achieve electrical connection between the tab 221 and the electrode terminal 24. The current collector 251 is made of a conductor material, such as copper, iron, aluminum, stainless steel, aluminum alloy, etc. The current collector 251 can be formed by bending the sheet metal at two different positions to form a first connecting part 2511, a third connecting part 2513, and a second connecting part 2512 that are sequentially connected, so that the third connecting part 2513 is bent relative to the first connecting part 2511 and the second connecting part 2512. It is understandable that during the forming process of bending the current collector 251, the sheet metal will be bent twice. The position for the first bending is at the connection position between the first connecting part 2511 and the third connecting part 2513, and the position for the second bending is at the connection position between the second connecting part 2512 and the third connecting part 2513. The first connecting part 2511, the second connecting part 2512, and the third connecting part 2513 can all be in a plate-like structure. The first connecting part 2511 and the second connecting part 2512 can extend in the same direction from the positions connected to the third connecting part 2513. For example, the first connecting part 2511, the third connecting part 2513, and the second connecting part 2512 are sequentially connected to form a "U" shape. The first connecting part 2511 and the second connecting part 2512 can also extend in opposite directions from the positions connected to the third connecting part 2513. The third connecting part 2513 can be vertically or obliquely arranged relative to the first connecting part 2511 and the second connecting part 2512.

The third connecting part 2513 is bent relative to the first connecting part 2511 and the second connecting part 2512. It can be understood that the third connecting part 2513 is arranged at an angle with the first connecting part 2511, and the third connecting part 2513 is arranged at an angle with the second connecting part 2512. The third connecting part 2513 and the first connecting part 2511 can be arranged at acute, right, or obtuse angles. The third connecting part 2513 and the second connecting part 2512 can also be arranged at acute, right, or obtuse angles. Certainly, the angle between the third connecting part 2513 and the first connecting part 2511 can be equal or unequal to the angle between the third connecting part 2513 and the second connecting part 2512.

The fusing part 2511a is the part on the first connecting part 2511 that is fused when the current flowing through the current collector 251 between the electrode terminal 24 and the tab 221 reaches the fuse current. After the fusing part 2511a is fused, the first connecting part 2511 will be disconnected into two disconnected parts to achieve safety protection. Certainly, the fusing part 2511a can be formed on the first connecting part 2511 in various ways, such as setting through holes, grooves, notches, etc. on the first connecting part 2511 to form the fusing part 2511a correspondingly.

Insulator 252 is made of an insulating material, such as plastic, rubber, etc. The insulator 252 can cover the fusing part 2511a in various ways. The insulator 252 can be set on the surface of the first connecting part 2511 near the tab 221 to cover the fusing part 2511a. For example, the insulator 252 is bonded to the surface of the first connecting part 2511 near the tab 221. The insulator 252 can also be wrapped around the first connecting part 2511 in the circumferential direction of the first connecting part 2511, so as to cover the fusing part 2511a, as long as the insulator 252 can block the overlap between the tab 221 and the fusing part 2511a. Similarly, the insulator 252 can cover the third connecting part 2513 in various ways. The insulator 252 can be set on the surface of the third connecting part 2513 near the tab 221 to cover the third connecting part 2513. For example, the insulator 252 is bonded to the surface of the third connecting part 2513 near the tab 221. The insulator 252 can also be wrapped around the third connecting part 2513 in the circumferential direction of the third connecting part 2513, so as to cover the third connecting part 2513, as long as the insulator 252 can block the overlap between the tab 221 and the third connecting part 2513.

In the embodiment of the present disclosure, the insulator 252 covers the fusing part 2511a and the third connecting part 2513, so as to allow the insulator 252 to insulate and isolate any one of the fusing part 2511a and the third connecting part 2513 from the tab 221, thereby reducing the risk of the fuse function failure of the current collector component 25 caused by the overlap between the tab 221 and the fusing part 2511a and/or the third connecting part 2513, and improving the safety of the battery cell 20.

In some embodiments, continuing to refer to FIG. 5, the insulator 252 includes a first wrapping part 2521 and a second wrapping part 2522. The first wrapping part 2521 is wrapped around the first connecting part 2511 in a circumferential direction of the first connecting part 2511, so as to cover the fusing part 2511a. The second wrapping part 2522 is connected to the first wrapping part 2521, and the second wrapping part 2522 is wrapped around the third connecting part 2513 along the circumferential direction of the third connecting part 2513, so as to cover the third connecting part 2513.

The first wrapping part 2521 is a portion of the insulator 252 that is circumferentially wrapped on the first connecting part 2511. The circumferential wrapping herein means that the first wrapping part 2521 wraps around the first connecting part 2511 at least one full circumference along the circumferential direction of the first connecting part 2511. In the extension direction of the first connecting part 2511, the first wrapping part 2521 has a connecting end and a free end 2521a opposite to each other. The connecting end is connected to the second wrapping part 2522. The free end 2521a is positioned so long as it is possible for the first wrapping part 2521 to cover the fusing part 2511a. For example, along the extension direction of the first connecting part 2511 (the direction in which the connecting end of the first wrapping part 2521 points toward the free end 2521a), the free end 2521a extends beyond the fusing part 2511a, and there is a distance between the free end 2521a and the end of the first connecting part 2511 away from the third connecting part 2513, that is, the first wrapping part 2521 does not fully cover the first connecting part 2511. The region between the end of the first connecting part 2511 away from the third connecting part 2513 and the free end 2521a is used to connect to the tab 221.

The second wrapping part 2522 is a portion of the insulator 252 that is circumferentially wrapped on the third connecting part 2513. The circumferential wrapping herein means that the second wrapping part 2522 wraps around the third connecting part 2513 at least one full circumference along the circumferential direction of the third connecting part 2513. The second wrapping part 2522 can only cover a portion of the third connecting part 2513, that is, the end of the second wrapping part 2522 away from the first wrapping part 2521 does not extend to the position where the third connecting part 2513 is connected to the second connecting part 2512. The second wrapping part 2522 can also completely cover the third connecting part 2513, that is, the end of the second wrapping part 2522 away from the first wrapping part 2521 extends to the position where the third connecting part 2513 is connected to the second connecting part 2512.

In this embodiment, the insulator 252 can be in various structures. For example, the insulator 252 is a tape, and after the tape is wrapped around the current collector 251, the first wrapping part 2521 and the second wrapping part 2522 are formed to wrap around the first connecting part 2511 and the third connecting part 2513, respectively. For another example, the insulator 252 is an insulating sleeve which is sleeved over the current collector 251, and the insulating sleeve has the first wrapping part 2521 and the second wrapping part 2522. After the insulating sleeve is sleeved over the current collector 251, the first wrapping part 2521 and a second wrapping part 2522 are wrapped around the first connecting part 2511 and the third connecting part 2513, respectively. For yet another example, the insulating sleeve is an injection molded part connected to a surface of the current collector 251, and after the injection molded part is formed by injection molding on the surface of the current collector 251, the first wrapping part 2521 and the second wrapping part 2522 are formed, which are respectively wrapped around the first connecting part 2511 and the third connecting part 2513.

In this embodiment, the first wrapping part 2521 is wrapped around the first connecting part 2511 along the circumferential direction of the first connecting part 2511. Firstly, the connection firmness between the insulator 252 and the current collector 251 can be improved. Secondly, the risk of overlap between the tab 221 and the fusing part 2511a can be further reduced. Thirdly, the first wrapping part 2521 can play a role in blocking the electrolyte to a certain extent, thereby reducing the risk of the electrolyte connecting the disconnected two parts electrically after the fusing part 2511a is fused. The second wrapping part 2522 is wrapped around the third connecting part 2513 along the circumferential direction of the third connecting part 2513. On one hand, the connection firmness between the insulator 252 and the current collector 251 can be improved. On the other hand, the risk of overlap between the tab 221 and the third connecting part 2513 can be further reduced.

In some embodiments, the second connecting part 2512 has a first surface 2512a and a second surface 2512b arranged opposite each other in a thickness direction thereof. The first surface 2512a is closer to the first connecting part 2511 than the second surface 2512b along the thickness direction of the second connecting part 2512, and the first surface 2512a is configured to connect to the electrode terminal 24. The insulator 252 further includes a covering part 2523, wherein the covering part 2523 is connected to the second wrapping part 2522, and the covering part 2523 covers at least a part of the second surface 2512b.

The first surface 2512a is the surface where the second connecting part 2512 is connected to the electrode terminal 24. For example, in the battery cell 20, if the electrode terminal 24 is welded to the second connecting part 2512, the surface where the second connecting part 2512 is welded to the electrode terminal 24 is the first surface 2512a. The second surface 2512b is the surface of the second connecting part 2512 facing away from the first surface 2512a. In the battery cell 20, the second surface 2512b is the surface of the second connecting part 2512 facing the electrode assembly 22.

The covering part 2523 is a portion of the insulator 252 connected to the second wrapping part 2522 and located on the second surface 2512b. The covering part 2523 may cover a part of the second surface 2512b. For example, in the extension direction of the second connecting part 2512, the covering part 2523 does not extend from a position connected to the second wrapping part 2522 to the end of the second connecting part 2512 away from the third connecting part 2513. The covering part 2523 may cover completely the second surface 2512b. For example, in the extension direction of the second connecting part 2512, the covering part 2523 extends from a position connected to the second wrapping part 2522 to the end of the second connecting part 2512 away from the third connecting part 2513. In some embodiments, the insulator 252 may also include a third wrapping part connected to the second wrapping part 2522. The third wrapping part is wrapped around the second connecting part 2512 along the circumferential direction of the second connecting part 2512. The covering part 2523 is a part of the third wrapping part located on the second surface 2512b.

In this embodiment, the covering part 2523 can play a role in isolating the tab 221, thereby reducing the risk of the tab 221 overlapping on the second surface 2512b of the second connecting part 2512 to cause the fuse function failure of the current collector component 25.

In some embodiments, the thickness of the covering part 2523 is 0.3-0.8mm.

If the thickness of the covering part 2523 is too small, the insulation effect of the covering part 2523 is poor; and if the thickness of the covering part 2523 is too large, too much space inside the battery cell 20 will be occupied, which impacts the energy density of the battery cell 20. Therefore, the thickness of the covering part 2523 is set within a reasonable range, which can ensure that the covering part 2523 has a good insulation and isolation effect on the tab 221 and the second surface 2512b, and also avoid occupying too much space inside the battery cell 20 due to the too thick covering part 2523.

In some embodiments, the second surface 2512b is provided with multiple rows of concave part 2512c.

Understandably, the concave part 2512c is concave in a direction from the second surface 2512b to the first surface 2512a, and the concave part 2512c can be in various shapes, such as circular, rectangular, and elliptical. The multiple rows of concave parts 2512c can be arranged along the extension direction of the second connecting part 2512, so that all concave parts 2512c are distributed on the second surface 2512b in a rectangular array.

As an example, the covering part 2523 covers a part of the second surface 2512b, and the region where the concave part 2512c is set on the second surface 2512b is not covered by the covering part 2523.

During the welding process between the electrode terminal 24 and the second connecting part 2512, after the electrode terminal 24 and the first surface 2512a of the second connecting part 2512 contact each other, the welding laser is irradiated on the second surface 2512b of the second connecting part 2512. If the second surface 2512b is too smooth, the laser irradiated on the second surface 2512b is easily reflected, resulting in poor welding effect, such that the welding firmness between the second connecting part 2512 and the electrode terminal 24 is poor.

Therefore, in this embodiment, multiple rows of concave parts 2512c are provided on the second surface 2512b to increase the roughness of the second surface 2512b, thereby facilitating the welding of the second connecting part 2512 with the electrode terminal 24, and improving the firmness after welding the second connecting part 2512 with the electrode terminal 24.

In some embodiments, the wall thickness of the first wrapping part 2521 is 0.3-0.8mm; and/or the wall thickness of the second wrapping part 2522 is 0.3-0.8mm.

The wall thickness of the first wrapping part 2521 is the thickness of the first wrapping part 2521 protruding from the surface of the first connecting part 2511; similarly, the wall thickness of the second wrapping part 2522 is the thickness of the second wrapping part 2522 protruding from the surface of the third connecting part 2513.

In this embodiment, the wall thickness of the first wrapping part 2521 is set within a reasonable range, which can ensure that the first wrapping part 2521 has a good insulation and isolation effect on the tab 221 and the fusing part 2511a, and also avoid occupying too much space inside the battery cell 20 due to the too thick wall of the first wrapping part 2521. Similarly, the wall thickness of the second wrapping part 2522 is set within a reasonable range, which can ensure that the second wrapping part 2522 has a good insulation and isolation effect on the tab 221 and the third connecting part 2513, and also avoid occupying too much space inside the battery cell 20 due to the too thick wall of the second wrapping part 2522.

In some embodiments, referring to FIG. 6, FIG. 6 is a bottom view of the current collector component 25 shown in FIG. 5. Along the extension direction of the first connecting part 2511, the distance D where one end of the first wrapping part 2521 away from the second wrapping part 2522 protrudes from the fusing part 2511a is not less than 2mm.

The end of the first wrapping part 2521 away from the second wrapping part 2522 is the free end 2521a of the first wrapping part 2521. For example, the first connecting part 2511 is provided with a notch 2511b, which correspondingly forms the fusing part 2511a. Specifically, two notches 2511b can be set on the first connecting part 2511, and the two notches 2511b are respectively set on two sides in the width direction of the first connecting part 2511. The region of the first connecting part 2511 located between the two notches 2511b is the fusing part 2511a. The distance D at which the end of the first wrapping part 2521 away from the second wrapping part 2522 exceeds the fusing part 2511a is the distance between the free end 2521a of the first wrapping part 2521 and the notch 2511b.

In this embodiment, the distance D at which the end of the first wrapping part 2521 away from the second wrapping part 2522 exceeds the fusing part 2511a is set within a reasonable range, which further reduces the risk of overlap between the tab 221 and the fusing part 251 1a. On the other hand, this configuration further reduces the risk of electrolyte entering the first wrapping part 2521 and electrically connecting the two parts formed by the first connecting part 2511 after the fusing part 2511a is fused.

In some embodiments, the insulator 252 is an injection molded part connected to a surface of the current collector 251.

The insulator 252 can be injection-molded onto the surface of the current collector 251 near the tab 221. For example, the insulator 252 is injection-molded onto the surfaces of the first connecting part 2511 and the third connecting part 2513 near the tab 221. The insulator 252 can also be injection-molded on the surface of the current collector 251 in a whole circumference, thereby forming a first wrapping part 2521 and a second wrapping part 2522, which are respectively wrapped on the first connecting part 2511 and the third connecting part 2513.

In this embodiment, the insulator 252 is an injection molded part connected to a surface of the current collector 251, such that the insulator 252 can be formed through injection molding, and thus the molding method is simple and cost-effective. The molded insulator 252 is combined together with the surface of the current collector 251, thereby improving the firmness of the connection between the insulator 252 and the current collector 251. In the embodiment where the insulator 252 includes the first wrapping part 2521 and the second wrapping part 2522, the injection-molded insulator 252 is combined with the surface of the current collector 251, thereby effectively preventing electrolyte from entering the insulator 252.

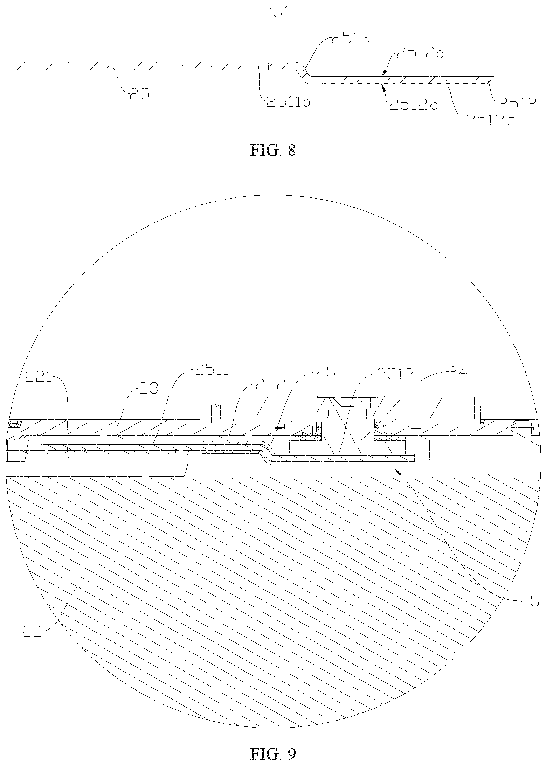

In some embodiments, referring to FIGS. 7 and 8, FIG. 7 is an axonometric drawing of the current collector 251 shown in FIG. 6; and FIG. 8 is a sectional view of the current collector 251 shown in FIG. 7. The first connecting part 2511 and the second connecting part 2512 are arranged in parallel, and the first connecting part 2511 and the second connecting part 2512 extend in opposite directions from the positions connected to the third connecting part 2513, respectively.

It can be understood that if the first connecting part 2511 extends in a positive direction (a direction from the right to the left in FIG. 8) from the position connected to the third connecting part 2513, the second connecting part 2512 extends in a reverse direction (a direction from the left to the right in FIG. 8) from the position connected to the third connecting part 2513.

In this embodiment, the first connecting part 2511 and the second connecting part 2512 extend in opposite directions from the positions connected to the third connecting part 2513, respectively, thereby enabling the connection of the current collector 251 to the tab 221 and electrode terminal 24 that are far apart along the extension direction of the first connecting part 2511.

In some embodiments, referring to FIG. 8 continuously, the third connecting part 2513 is arranged obliquely relative to the first connecting part 2511 and the second connecting part 2512, and both the first connecting part 2511 and the second connecting part 2512 are arranged at an obtuse angle with the third connecting part 2513. Based on such structure, the first connecting part 2511 and the second connecting part 2512 are farther away from each other in the extension direction of the first connecting part 2511, thereby reducing the risk that the tab 221 crosses the fusing part 2511a and the third connecting part 2513 and overlaps with the second connecting part 2512.

Furthermore, referring to FIG. 3, an embodiment of the present disclosure provides a battery cell 20, wherein the battery cell 20 comprises a casing 21, an electrode assembly 22, an end cover 23, an electrode terminal 24, and a current collector component 25 provided in any one of the above embodiments. The casing 21 has an opening. The electrode assembly 22 has a tab 221, and the electrode assembly 22 is accommodated within the casing 21. The end cover 23 is configured to close the opening. The electrode terminal 24 is arranged on the end cover 23. The current collector component 25 is located on one side of the end cover 23 facing the electrode assembly 22, with the first connecting part 2511 connected to the tab 221 and the second connecting part 2512 connected to the electrode terminal 24.

For example, the first connecting part 2511 is welded to the tab 221, and the second connecting part 2512 is welded to the electrode terminal 24.

In some embodiments, referring to FIG. 9, FIG. 9 is a partially enlarged view at the battery cell 20 shown in FIG. 3. The second connecting part 2512 is located further away from the end cover 23 than the first connecting part 2511 along the thickness direction of the end cover 23. This structure can narrow the gap between the end cover 23 and electrode assembly 22, which is beneficial for improving the energy density of the battery cell 20.

The embodiment of the present disclosure provides a battery 100, which includes a box 10 and a battery cell 20 provided by any one of the above embodiments. The box 10 is configured to accommodate the battery cell 20.

The embodiment of the present disclosure provides an electrical equipment, including a battery 100 provided by any one of the above embodiments.

The electrical equipment can be any one of the aforementioned devices that uses battery 100.

Referring to FIG. 5, the embodiment of the present disclosure provides a current collector component 25, which includes a current collector 251 and an insulator 252. The current collector 251 is configured to connect the tab 221 and electrode terminal 24 to achieve electrical connection between the tab 221 and electrode terminal 24. The current collector 251 includes a first connecting part 2511, a second connecting part 2512, and a third connecting part 2513. The first connecting part 2511 is configured for connecting the tab 221, and the first connecting part 2511 has a fusing part 2511a. The second connecting part 2512 has a first surface 2512a and a second surface 2512b arranged oppositely in a thickness direction thereof, wherein along the thickness direction of the second connecting part 2512, the first surface 2512a is closer to the first connecting part 2511 than the second surface 2512b, and the first surface 2512a is configured to be connected with the electrode terminal 24. The third connecting part 2513 connects the first connecting part 2511 and the second connecting part 2512, and the third connecting part 2513 is bent relative to the first connecting part 2511 and the second connecting part 2512. The first connecting part 2511 and the second connecting part 2512 are arranged in parallel, and the first connecting part 2511 and the second connecting part 2512 extend in opposite directions from the positions connected to the third connecting part 2513, respectively. The insulator 252 includes a first wrapping part 2521, a second wrapping part 2522, and a covering part 2523. The first wrapping part 2521 is wrapped around the first connecting part 2511 in a circumferential direction of the first connecting part 2511, so as to cover the fusing part 2511a. The second wrapping part 2522 is connected to the first wrapping part 2521, and the second wrapping part 2522 is wrapped around the third connecting part 2513 along the circumferential direction of the third connecting part 2513, so as to cover the third connecting part 2513. The covering part 2523 is connected to the second wrapping part 2522, and the covering part 2523 covers at least a part of the second surface 2512b.

In such a current collector component 25, the first wrapping part 2521 covers the first connecting part 2511, the second wrapping part 2522 covers the third connecting part 2513, and the covering part 2523 covers at least a part of the second surface 2512b of the second connecting part 2512, so that the fusing function of the current collector component 25 is not easily ineffective, and the safety of the battery cell 20 is improved.

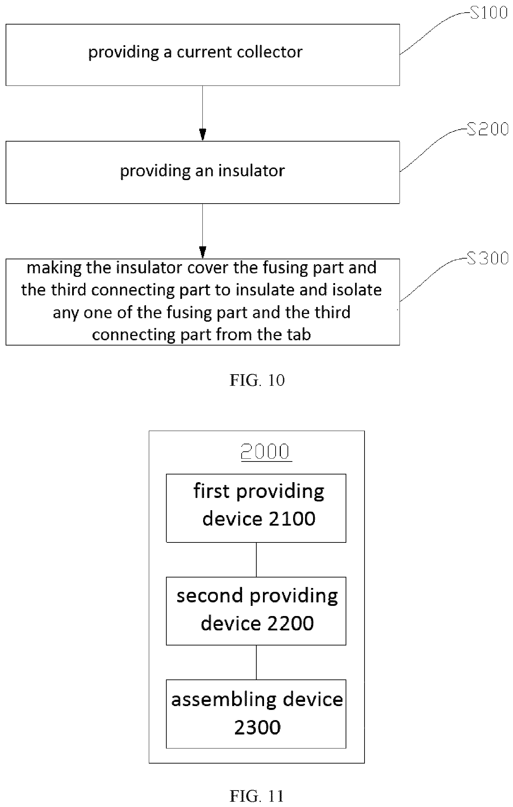

Referring to FIG. 10, FIG. 10 is a flowchart of the manufacturing method for current collector component 25 provided in some embodiments of the present disclosure. The embodiment of the present disclosure provides a manufacturing method for current collector component 25, the manufacturing method including:
S100: providing a current collector 251, wherein the current collector 251 is configured to connect a tab 221 and an electrode terminal 24 to achieve an electrical connection between the tab 221 and the electrode terminal 24; the current collector 251 includes a first connecting part 2511, a second connecting part 2512, and a third connecting part 2513, wherein the first connecting part 2511 is configured to be connected to the tab 221, and the first connecting part 2511 has a fusing part 2511a; the second connecting part 2512 is configured to be connected to the electrode terminal 24; and the third connecting part 2513 connects the first connecting part 2511 and the second connecting part 2512, and is bent relative to the first connecting part 2511 and the second connecting part 2512;
S200: providing an insulator 252; and
S300: making the insulator 252 cover the fusing part 2511a and the third connecting part 2513 to insulate and isolate any one of the fusing part 2511a and the third connecting part 2513 from the tab 221.

In the above method, there is no special restriction on the order of steps S100 and S200. It is possible to execute S100 first and then step S200; or it is possible to execute step S200 first and then step S100.

In some embodiments, step S300 includes:
injection-molding the insulator 252 onto the surface of the current collector 251, such that the insulator 252 covers the fusing part 2511a and the third connecting part 2513.

In this embodiment, the insulator 252 is injection-molded on a surface of the current collector 251, in which the molding method for the insulator 252 is simple and cost-effective. The molded insulator 252 is combined together with the surface of the current collector 251, thereby improving the firmness of the connection between the insulator 252 and the current collector 251.

It should be noted that the relevant structures of the current collector component 25 manufactured by the manufacturing methods provided in the above embodiments can be found in the current collector component 25 provided in the previous embodiments, and will not be further repeated here.

Referring to FIG. 11, FIG. 11 is a schematic block diagram of the manufacturing equipment 2000 for current collector component 25 provided in some embodiments of the present disclosure. The embodiment of the present disclosure also provides a manufacturing equipment 2000 for the current collector component 25, which includes a first providing device 2100, a second providing device 2200, and an assembling device 2300. The first providing device 2100 is configured to provide a current collector 251. The current collector 251 is configured to connect the tab 221 and electrode terminal 24 to achieve electrical connection between the tab 221 and electrode terminal 24. The current collector 251 includes a first connecting part 2511, a second connecting part 2512, and a third connecting part 2513. The first connecting part 2511 is configured for connecting the tab 221, and the first connecting part 2511 has a fusing part 2511a. The second connecting part 2512 is configured for connecting the electrode terminal 24. The third connecting part 2513 is configured to connect the first connecting part 2511 and the second connecting part 2512, and is bent with respect to the first connecting part 2511 and the second connecting part 2512. The second providing device 2200 is configured to provide the insulator 252. The assembling device 2300 is configured to make the insulator 252 cover the fusing part 2511a and the third connecting part 2513 to insulate and isolate any one of the fusing part 2511a and the third connecting part 2513 from the tab 221.

It should be noted that the relevant structures of the current collector component 25 manufactured by the manufacturing equipment 2000 provided in the above embodiments can be found in the current collector component 25 provided in the previous embodiments, and will not be further repeated here.

It should be noted that in the absence of conflicts, the embodiments and the features in the embodiments in the present disclosure can be combined with each other.

The above embodiment is only used to illustrate the technical solution of the present disclosure and is not intended to limit it. For those skilled in the art, the present disclosure may undergo various modifications and variations. Any modifications, equivalent replacements, improvements, etc. made within the spirit and principles of the present disclosure shall be included within the scope of protection of the present disclosure.

## Claims

1. A current collector component, comprising:
a current collector, configured to connect a tab and an electrode terminal to achieve an electrical connection between the tab and the electrode terminal, wherein the current collector comprises:
a first connecting part, configured to be connected to the tab, wherein the first connecting part has a fusing part;
a second connecting part, configured to be connected to the electrode terminal; and
a third connecting part, wherein the third connecting part connects the first connecting part and the second connecting part, and is bent relative to the first connecting part and the second connecting part; and
an insulator, covering the fusing part and the third connecting part to insulate and isolate any one of the fusing part and the third connecting part from the tab.

2. The current collector component according to claim 1, wherein the insulator comprises:
a first wrapping part, wrapped around the first connecting part in a circumferential direction of the first connecting part, so as to cover the fusing part; and
a second wrapping part, connected to the first wrapping part, wherein the second wrapping part is wrapped around the third connecting part along a circumferential direction of the third connecting part, so as to cover the third connecting part.

3. The current collector component according to claim 2, wherein the second connecting part has a first surface and a second surface arranged oppositely in a thickness direction of the second connecting part, wherein along the thickness direction, the first surface is closer to the first connecting part than the second surface, and the first surface is configured to be connected with the electrode terminal; and
the insulator further comprises:
a covering part, connected to the second wrapping part, wherein the covering part covers at least a part of the second surface.

4. The current collector component according to claim 3, wherein the covering part has a thickness of 0.3-0.8mm.

5. The current collector component according to claim 3 or 4, wherein the second surface is provided with a plurality of rows of concave parts.

6. The current collector component according to any one of claims 2-5, wherein a wall thickness of the first wrapping part is 0.3-0.8mm; and/or a wall thickness of the second wrapping part is 0.3-0.8mm.

7. The current collector component according to any one of claims 2-6, wherein along an extension direction of the first connecting part, a distance where one end of the first wrapping part away from the second wrapping part protrudes from the fusing part is not less than 2mm.

8. The current collector component according to any one of claims 1-7, wherein the insulator is an injection molded part connected to a surface of the current collector.

9. The current collector component according to any one of claims 1-8, wherein the first connecting part and the second connecting part are arranged in parallel, and the first connecting part and the second connecting part extend in opposite directions from positions connected to the third connecting part, respectively.

10. The current collector component according to claim 9, wherein the third connecting part is arranged obliquely relative to the first connecting part and the second connecting part, and both the first connecting part and the second connecting part are arranged at an obtuse angle with the third connecting part.

11. A battery cell, comprising:
a casing, having an opening;
an electrode assembly, having a tab, wherein the electrode assembly is accommodated within the casing;
an end cover, configured to close the opening;
an electrode terminal, arranged on the end cover; and
the current collector component according to any one of claims 1-10, wherein the current collector component is located on one side of the end cover facing the electrode assembly, with the first connecting part connected to the tab and the second connecting part connected to the electrode terminal.

12. The battery cell according to claim 11, wherein along a thickness direction of the end cover, the second connecting part is further away from the end cover than the first connecting part.

13. A battery, comprising:
the battery cell according to claim 11 or 12; and
a box, configured to accommodate the battery cell.

14. An electrical equipment, comprising the battery according to claim 13.

15. A manufacturing method for a current collector component, comprising:
providing a current collector, wherein the current collector is configured to connect a tab and an electrode terminal to achieve an electrical connection between the tab and the electrode terminal, wherein the current collector comprises:
a first connecting part, configured to be connected to the tab, wherein the first connecting part has a fusing part;
a second connecting part, configured to be connected to the electrode terminal; and
a third connecting part, wherein the third connecting part connects the first connecting part and the second connecting part, and is bent relative to the first connecting part and the second connecting part;
providing an insulator; and
making the insulator cover the fusing part and the third connecting part to insulate and isolate any one of the fusing part and the third connecting part from the tab.

16. The manufacturing method for the current collector component according to claim 15, wherein the making the insulator cover the fusing part and the third connecting part comprises:
injection-molding the insulator on a surface of the current collector, such that the insulator covers the fusing part and the third connecting part.

17. A manufacturing equipment for a current collector component, comprising:
a first providing device, configured to provide a current collector, wherein the current collector is configured to connect a tab and an electrode terminal to achieve an electrical connection between the tab and the electrode terminal, wherein the current collector comprises:
a first connecting part, configured to be connected to the tab, wherein the first connecting part has a fusing part;
a second connecting part, configured to be connected to the electrode terminal; and
a third connecting part, wherein the third connecting part connects the first connecting part and the second connecting part, and is bent relative to the first connecting part and the second connecting part;
a second providing device, configured to provide an insulator; and
an assembling device, configured to make the insulator cover the fusing part and the third connecting part to insulate and isolate any one of the fusing part and the third connecting part from the tab.
